Europäisches Patentamt

European Patent Office

Office européen des brevets

(19)

(11) Veröffentlichungsnummer : **0 052 637**
**B1**

(12) **EUROPÄISCHE PATENTSCHRIFT**

(45) Veröffentlichungstag der Patentschrift :
16.04.86

(51) Int. Cl.⁴ : **A 01 J   5/08**

(21) Anmeldenummer : 81901538.9

(22) Anmeldetag : 27.05.81

(86) Internationale Anmeldenummer :
PCT/EP 81/00058

(87) Internationale Veröffentlichungsnummer :
WO/8103412 (10.12.81 Gazette 81/29)

(54) **Zweiraummelkbecher.**

(30) Priorität : 28.05.80 DE 3020294
16.06.80 DE 3022555

(43) Veröffentlichungstag der Anmeldung :
02.06.82 Patentblatt 82/22

(45) Bekanntmachung des Hinweises auf die Patenterteilung : 16.04.86 Patentblatt 86/16

(84) Benannte Vertragsstaaten :
AT CH DE FR GB LI LU NL SE

(56) Entgegenhaltungen :
EP-A- 0 006 024
AU-D-   528 766
DE-A- 1 582 972
DE-A- 1 632 935
DE-B- 1 274 847
DE-B- 1 296 867
DE-B- 1 299 165
FR-A- 2 069 236
GB-A- 1 003 631
GB-A- 2 057 845
US-A- 3 255 732

(73) Patentinhaber : HAPPEL, Fritz

D-8951 Baisweil 24 (DE)

(72) Erfinder : HAPPEL, Fritz

D-8951 Baisweil 24 (DE)
Erfinder : HAPPEL, Werner

D-8951 Baisweil 24 (DE)

(74) Vertreter : Dipl.-Phys.Dr. Manitz Dipl.-Ing. Finsterwald
Dipl.-Ing. Grämkow Dipl.-Chem.Dr. Heyn
Dipl.-Phys.Rotermund,
B.Sc. Morgan Robert-Koch-Strasse 1
D-8000 München 22 (DE)

**Beschreibung**

Die Erfindung betrifft einen Zweiraum-Melkbecher mit einer Becherhülse, einem in die Becherhülse eingesetzten Zitzengummi mit einem, mit einer Milchabführleitung verbindbaren Saugstutzen und einem Unterdruckentlastungsventil, das durch den beim Entlastungstakt erfolgenden Unterdruckabbau in der Becherhülse geöffnet wird und dann Luft in den Saugstutzen einströmen läßt.

Aus der DE-B-1 274 847 ist ein Klemmstück für Zweiraum-Melkbecher bekannt, das einen mit einer Rille und/oder einem Wulst versehenen Klemmkörper aufweist, von dessen Unterseite ein Rohrstutzen zum Anschluß an die Saugleitung mit einer auch den Klemmkörper durchsetzenden Bohrung ausgeht. Dabei ist das Klemmstück mit einem in einer Ebene der Melkbecherachse liegenden flachen Spreizflansch mit doppelt-tropfförmigem Querschnitt versehen, der beim Einführen des Klemmstückes in den Zitzengummi dessen schlauchförmigen unteren Teil radial vorspannt, wobei die äußeren tropfenförmigen Verdickungen die Räume ausfüllen, die bei sonstigen Klemmstücken die Verbindung von Zitzengummi-Innenraum und Milchabsaugleitung unerwünschterweise während des Entlastungstaktes aufrechterhalten. Durch die Trennung des Zitzengummi-Innenraums von einer Saugleitung soll ein Abbau des Unterdruckes in dem die Zitze umgebenden Raum während des Entlastungstaktes ermöglicht und dadurch die Blutzirkulation in den Zitzen gefördert und Euterschäden vermieden werden.

In dieser DE-B-1 274 847 wird auch das Einsteuern atmosphärischer Luft in den Zitzengummi-Innenraum beschrieben, wozu im Klemmstück Kanäle vorgesehen werden, die den Zitzengummi-Innenraum ständig mit der Außenluft verbinden. Die dabei auch während des Saugtaktes einströmende Luft beeinträchtigt zwar das Melkvakuum nicht wesentlich, belastet aber die Vakuumpumpe, die die kontinuierlich einströmende Luft abzusaugen hat. Bei größeren Melkanlagen, wo mehrere Melkzeuge gleichzeitig in Betrieb sind, kann die Vakuumpumpe eine erhebliche Mehrbelastung erfahren, so daß eine stärkere Dimensionierung des Maschinensatzes notwendig werden kann.

Um die Belastung der Vakuumpumpe herabzusetzen und ein Klemmstück zu schaffen, das während des Entlastungstaktes den Zitzengummi-Innenraum von der Saugleitung trennt und nur während dieser Zeit atmosphärische Luft in den Zitzengummi eintreten läßt, wird gemäß DE-B-1 274 847 das Klemmstück in der Weise ausgebildet, daß auf der Oberseite des Klemmkörpers ein dachförmig abgeschrägter Keil mit etwa kreisförmiger, dem Durchmesser des Zitzengummis entsprechender Grundfläche vorgesehen ist, von dessen Flachseiten zur Bohrung des Rohrstutzens führende und von dessen Giebelseite den Klemmkörper durchsetzende, zur äußeren Atmosphäre führende Kanäle ausgehen.

Wenn demgemäß der Pulsator Unterdruck in den Melkbecherzwischenraum einsteuert, nimmt der Zitzengummi Schlauchform an. Dabei werden die von den Flachseiten des Keils ausgehenden und zur Saugleitung führenden Bohrungen freigegeben, wodurch der Unterdruck im Zitzengummi-Innenraum wirksam und dem Euter Milch entzogen wird. Gleichzeitig werden die von den gekrümmten Giebelseiten ausgehenden und zur äußeren Atmosphäre führenden Bohrungen durch den sich anliegenden Zitzengummi verschlossen, so daß während des Saugtakts keine atmosphärische Luft einströmen kann. Wenn zur Herbeiführung des Entlastungstaktes der Pulsator atmosphärische Luft in den Melkbecherzwischenraum einsteuert, legt sich der Zitzengummi unter der Wirkung des äußeren Überdruckes flach zusammen. Dabei werden die von den Flachseiten des Keils ausgehenden Bohrungen verschlossen, so daß der Zitzengummi-Innenraum von der Unterdruckquelle getrennt wird. Da sich der flachliegende Zitzengummi verbreitert, hebt er sich von den Bohrungen an den gekrümmten Giebelseiten des Keiles ab, so daß nun atmosphärische Luft in den Zitzengummi-Innenraum einströmt. Das Öffnen und Schließen der verschiedenen Bohrungen im Wechseltakt beruht somit auf dem Wechsel zwischen Schlauch- und Flachform des elastischen Zitzengummis im Rhythmus der Pulsatorsteuerungen, wobei die Schlauchform zum Öffnen der Saugleitung und zum Schließen der Luftbohrungen und die Flachform zum Abschließen der Saugleitung und zum Öffnen der Luftbohrungen benutzt wird. Es wird auch darauf hingewiesen, daß auf die Luftbohrungen verzichtet werden kann, wenn durch die natürliche Undichtheit ein ausreichender Abbau des Unterdrucks erreicht wird.

Nachteilig bei diesem zur Herabsetzung der Belastung der Vakuumpumpe bestimmten Klemmstück ist, daß in dem unterhalb der in den Dachschrägen gelegenen Öffnungen vorhandenen Ringraum praktisch keine Möglichkeit zur Milchabführung besteht, daß dieser Bereich und auch die verschiedenen Kanäle für eine Bürstenreinigung nicht zugänglich sind und somit eine ständige Verschmutzungsgefahr vorliegt, die in der Praxis nicht in Kauf genommen werden kann. Außerdem ist im Betrieb der Druckunterschied zwischen Atmosphäre und dem abgeschlossenen Raum zwischen Zitze und Einsatzstück nach erfolgtem Kollabieren des Zitzengummis so gering, daß die zur Atmosphäre führenden Kanäle, deren Mündungen ständig mit der mit Milch benetzten Zitzengummiwandung zusammenwirken müssen, nicht freigehalten werden können. Die völlig unzureichenden Reinigungsmöglichkeiten und das schnelle Verstopfen der zur Atmosphäre führenden Kanäle haben dazu geführt, daß das bekannte Klemmstück keinen Eingang in die Praxis finden konnte.

Aufgabe der Erfindung ist es, einen Melkbecher der eingangs angegebenen Art, d. h. einen Melkbecher, bei dem während der Entlastungsphase Luft in den Saugstutzen eingeleitet wird, in der Weise auszubilden, daß zusätzliche, durch eventuelle Verschmutzung störungsanfällige Ventilteile in gleicher Weise wie für die Bürstenreinigung schwer zugängliche Bereiche vermieden werden und dennoch eine zeitlich exakte Lufteinsteuerung während der Entlastungsphase ermöglicht wird.

Gelöst wird diese Aufgabe nach der Erfindung dadurch, daß an den Saugstutzen zwei einander diametral gegenüberliegende, eine Spreizgabel für den Zitzengummi bildende Spreizelemente angeformt sind, daß die Spreizung der Spreizelemente derart gewählt ist, daß der Zitzengummi in der Saugphase an den freien Enden der Spreizelemente anliegt und in der Entlastungsphase sich zwischen dem Zitzengummi und den freien Enden der Spreizelemente Freiräume ergeben, daß in einem der Spreizelemente ein einerseits zur Atmosphäre führender und andererseits gegenüber der Innenwandung des Zitzengummis mündender Kanal vorgesehen ist, daß das Unterdruckentlastungsventil von der Mündung des Kanals und dem ihr gegenüberliegenden Wandungsbereich des Zitzengummis gebildet ist, und daß der Öffnungsquerschnitt des Kanals so gewählt ist, daß die während der Entlastungsphase durch das Unterdruckventil eintretende Luftmenge ein Ablösen der einzelnen Teilmilchsäulen und ein Abführen der Milch ohne Rückspüleffekte bewirkt.

Durch die Ausnutzung der vollen Druckdifferenz zwischen Melkvakuum und Atmosphäre während der gesamten Entlastungsphase kann ein definierter und kräftiger Luftstrom gegen den der Kanalmündung gegenüberliegenden Wandungsbereich des Zitzengummis gerichtet werden, wodurch dieser für den Ventileffekt wichtige Bereich stets getrocknet bzw. von Milchresten befreit wird, bevor er wieder im nächsten Takt an der Kanalmündung zur Anlage kommt. Dieser Freiblaseffekt führt dazu, daß das Unterdruckentlastungsventil auch über lange Zeit ständig funktionssicher arbeitet. Aufgrund der Einsteuerung einer definierten Luftmenge während eines jeden Entlastungstaktes werden unerwünschte Rückspüleffekte der ermolkenen Milch ausgeschaltet und es wird sichergestellt, daß die ermolkene Milch aufgrund der gesteuerten Belüftung jedes Melkbechers rückflußfrei über die kurzen Milchschläuche abgeführt werden kann. Besonders vorteilhafte Ausgestaltungen der Erfindung sind in den Unteransprüchen angeführt, wobei insbesondere die Verwendung eines in das atmosphärenseitige Ende des zur Lufteinsteuerung vorgesehenen Kanals eingeführten und herausnehmbar ausgebildeten Filters sich auf die Dauer-Funktionsfähigkeit günstig auswirkt und sicherstellt, auch in staubiger Atmosphäre, wie dies in der Praxis gelegentlich vorkommt, ein einwandfreies Arbeiten des Melkbechers gewährleistet ist.

Die Erfindung wird nachfolgend anhand von Ausführungsbeispielen unter Bezugnahme auf die Zeichnung näher erläutert; in der Zeichnung zeigt:

Figur 1 eine schematische Längsschnitt-Darstellung eines Zweiraum-Melkbechers mit einer ersten Ausführungsvariante eines gemäß der Erfindung ausgebildeten Einsatzstückes,

Figur 1a eine zweite Variante des Einsatzstückes für einen Zweiraum-Melkbecher gemäß Fig. 1,

Figur 2 einen Querschnitt des Melkbechers nach Fig. 1 in Höhe der Mündung des zur Atmosphäre führenden Kanals während der Saugphase, und

Figur 3 eine der Fig. 2 entsprechende Schnittdarstellung während der Massagephase.

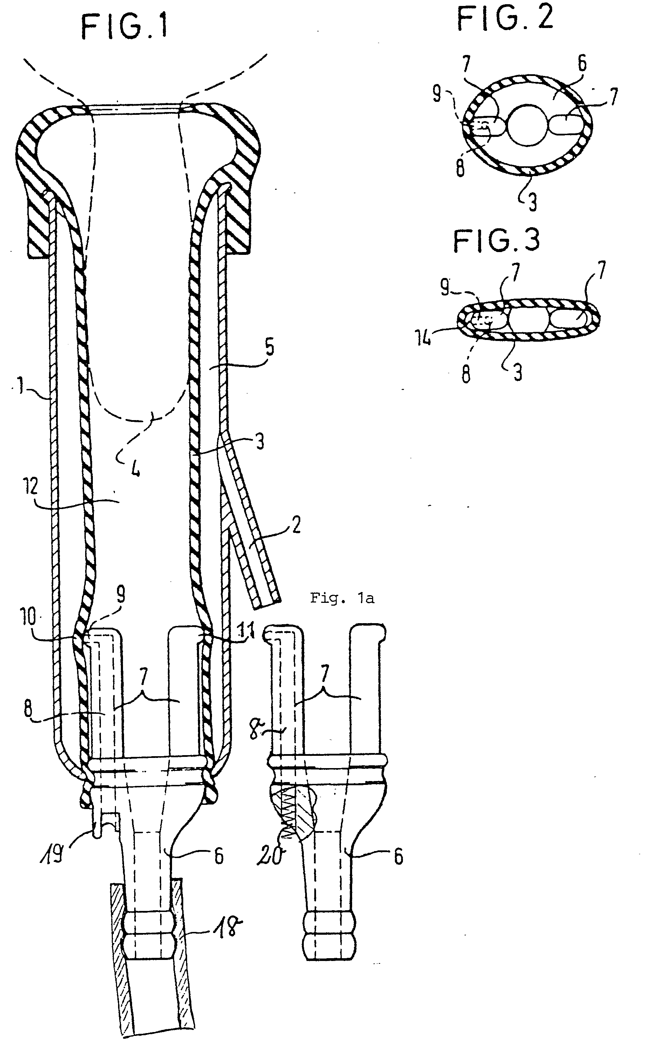

Fig. 1 zeigt einen Zweiraum-Melkbecher, bestehend aus einer Melkbecherhülse 1 mit einem Anschlußstutzen 2, einem in der Melkbecherhülse festgespannten Zitzengummi 3 zur Aufnahme einer strichliert angedeuteten Zitze 4. Zwischen Zitzengummi 3 und Becherhülse 1 befindet sich der Melkbecherzwischenraum 5, der über den Anschlußstutzen 2 periodisch an Unterdruck und Atmosphäre gelegt wird.

Ein an sich konventionelles Schauglas 6, mittels dessen das untere Ende des Zitzengummis 3 in der Melkbecherhülse 1 festgespannt wird, ist gemäß der Erfindung mit einem sich in den Zitzengummiinnenraum erstreckenden Einsatz 7 in Form einer Spreizgabel versehen. Auf den Schauglasstutzen ist der zum Sammelstück führende kurze Milchschlauch 18 geschoben.

In einem der beiden Gabelelemente ist ein Kanal 8 vorgesehen, der einerseits durch die Schauglaswandung zur Atmosphäre führt und andererseits nach entsprechender Umlenkung in eine zur Melkbecherlängsachse senkrechte Richtung unmittelbar gegenüber der Innenwandung des Zitzengummis 3 mündet. Im Bereich der atmosphärenseitigen Mündung des Kanals 8 ist ein Schutzschild 19 angebracht, hinter dem die Eintrittsöffnung an der Spitze eines Dreieckbereichs beginnt, so daß ein Ansaugen von Grobteilen durch das Schild und ein Ablagern von Schmutz an der Eintrittsöffnung verhindert wird.

Der Einsatz 7 spreizt den Zitzengummi in Richtung einer durch die Mündung 9 des Kanals 8 verlaufenden Axialebene leicht vor, und diese leichte Spreizung bestimmt gleichzeitig die Faltrichtung des Zitzengummis beim Kollabieren bzw. beim Zusammenfalten des Zitzengummis im Massagetakt.

Der der Mündung 9 des Kanals unmittelbar gegenüberliegende Teilbereich 10 des Zitzengummis 3 bildet zusammen mit der Mündung 9 ein Ventil, das immer dann, wenn der Zitzengummi 3 seine Ruhelage einnimmt, d. h. keine Druckdifferenz zwischen Zitzengummiinnenraum 12 und Melkbecherzwischenraum 5 vorliegt, geschlossen ist, und zwar aufgrund der durch die Spreizung erbrachten leichten Vorspannung.

Das freie Ende des Einsatzes 7 ist mit einem Wulst 11 versehen, und durch diesen Wulst 11 erstreckt sich auch das radial verlaufende Ende des Kanals 8 bzw. der Endabschnitt der Mündung 9. Es wird durch diese Ausgestaltung ein besonders gutes Anliegen bzw. Anschmiegen des Zitzengummis an der Mündung 9 sichergestellt, so daß praktisch mit einer sehr geringen Spreizung gearbeitet werden kann, die im wesentlichen nur sicherstellen muß, daß der Zitzengummi in definierter Weise, d. h. entsprechend einer definierten Ebene kollabiert.

Die in Fig. 1a gezeigte Variante des Einsatzstückes 7 unterscheidet sich von der Ausführungsform nach Fig. 1 dadurch, daß im atmosphärenseitigen Bereich des Kanals 8 ein Gewindestift oder eine Spirale 20 vorgesehen ist, wobei diese Elemente zwecks Reinigung leicht herausnehmbar angebracht sind und auch zur Festlegung der Drosselöffnung des Kanals 8 verwendet werden können.

Die Schnittansicht nach Fig. 2 zeigt die leichte Spreizung des Zitzengummis 3 durch das Einsatzstück 7 und läßt insbesondere erkennen, daß in diesem Zustand, d. h. während der Saugphase, wenn der Zitzengummi keinen Differenzdrücken ausgesetzt ist, die Mündung 9 des zur Atmosphäre führenden Kanals eindeutig geschlossen ist, so daß keine Verbindung zwischen Atmosphäre und Zitzengummiinnenraum und damit auch kein Eintreten von Luft möglich ist.

Fig. 3 zeigt den Zitzengummi 3 im kollabierten Zustand, d. h. während der Entlastungsphase, wenn in den Melkbecherzwischenraum 5 Atmosphäre eingesteuert wird. Da die Faltrichtung des Zitzengummis aufgrund der in Fig. 2 zu sehenden leichten Spreizung vorgegeben ist, wird beim Falten bzw. Kollabieren des Zitzengummis die Mündung 9 des zur Atmosphäre führenden Kanals frei, da sich zwischen Einsatz 7 und Zitzengummi 3 in den Endbereichen des sich ausbildenden Flachovals zwangsläufig Freiräume 14 ergeben, über die eine Verbindung des zur Atmosphäre führenden Kanals mit dem Zitzengummiinnenraum erfolgt.

Die durch das Kollabieren des Zitzengummis bewirkten Relativbewegungen zwischen Einsatzstück 7 und Zitzengummi in den seitlichen Randbereichen der Faltebene werden demgemäß dazu ausgenützt, um auf äußerst einfache Weise eine sicher funktionierende Ventilwirkung zu erzielen.

Der wirksame Öffnungsquerschnitt des Kanals 8 wird so gewählt, daß die eintretende Luftmenge während der Entlastungsphase einerseits ein Ablösen der einzelnen Teilmilchsäulen und damit ein Abführen der Milch ohne Rückspüleffekte ermöglicht, andererseits aber auch die Milchabzugsgeschwindigkeit nur so groß gewählt wird, daß keine unerwünschte Schaumbildung eintritt. Bevorzugt wird der geringste Öffnungsquerschnitt des Kanals 8 im Bereich der atmosphärenseitigen Mündung vorgesehen, was das Freihalten dieser Öffnung von Ablagerungen und Verschmutzungen erleichtert.

**Patentansprüche**

1. Zweiraum-Melkbecher mit einer Becherhülse (1), einem in die Becherhülse (1) eingesetzten Zitzengummi (3) mit einem mit einer Milchabführleitung (18) verbindbaren Saugstutzen (6) und mit einem Unterdruckentlastungsventil, das durch den beim Entlastungstakt erfolgenden Unterdruckabbau in der Becherhülse (1) geöffnet wird und dann Luft in den Saugstutzen (6) einströmen läßt, gekennzeichnet, durch die Kombination der Merkmale,

a) daß an den Saugstutzen (6) zwei einander diametral gegenüberliegende, eine Spreizgabel für den Zitzengummi (3) bildende Spreizelemente (7) angeformt sind,

b) daß die Spreizung der Spreizelemente (7) derart gewählt ist, daß der Zitzengummi (3) in der Saugphase an den freien Enden der Spreizelemente (7) anliegt und in der Entlastungsphase sich zwischen dem Zitzengummi (3) und den freien Enden der Spreizelemente Freiräume (14) ergeben,

c) daß in einem der Spreizelemente (7) ein einerseits zur Atmosphäre führender und andererseits gegenüber der Innenwandung des Zitzengummis (3) mündender Kanal (8) vorgesehen ist,

d) daß das Unterdruckentlastungsventil von der Mündung (9) des Kanals (8) und dem ihr gegenüberliegenden Wandungsbereich (10) des Zitzengummis (3) gebildet ist, und

e) daß der Öffnungsquerschnitt des Kanals (8) so gewählt ist, daß die während der Entlastungsphase durch das Unterdruckventil (9, 10) eintretende Luftmenge ein Ablösen der einzelnen Teilmilchsäulen und ein Abführen der Milch ohne Rückspüleffekte bewirkt.

2. Vorrichtung nach Anspruch 1, dadurch gekennzeichnet, daß das freie Ende der Spreizelemente (7) als radial nach außen vorstehender Wulst (11) ausgebildet ist, in dem die mit dem Ventil-Wandungsteil (10) des Zitzengummis (3) zusammenwirkende Kanalmündung (9) vorgesehen ist.

3. Vorrichtung nach Anspruch 1 oder 2, dadurch gekennzeichnet, daß die Kanalmündung (9) einen kleineren Querschnitt als der zur Atmosphäre führende Kanal (8) besitzt.

4. Vorrichtung nach einem oder mehreren der vorhergehenden Ansprüche, dadurch gekennzeichnet, daß die Spreizelemente (7) so lang ausgebildet sind, daß das von der Kanalmündung (9) und dem Wandungsbereich (10) des Zitzengummis (3) gebildete Unterdruckentlastungsventil relativ dicht unterhalb der Zitze (4) gelegen ist.

5. Vorrichtung nach einem oder mehreren der vorhergehenden Ansprüche, dadurch gekennzeichnet, daß im atmosphärenseitigen Ende des Kanals (8) ein herausnehmbares Filter (20) und-

/oder ein Drosselorgan vorgesehen ist.

**Claims**

1. Two chamber milking cup comprising a milking cup shell (1) ; a teat rubber (3) which is inserted into the milking cup shell and which has a suction stub (6) connectable with a milk extraction line (18) ; and with a suction relief valve which is opened by the reduction of the suction in the milking cup shell (1) which occurs during the massage pulse and then allows air to flow into the suction stub (6), characterised by the combination of the features,

a) that two diametrically oppositely disposed spreading elements (7) which form a spreading fork for the teat rubber are formed on the suction stub (6),

b) that the separation of the spreading elements (7) is selected so that the teat rubber (3) contacts the free ends of the spreading elements (7) in the suction phase and free spaces (14) result between the teat rubber (3) and the free ends of the spreading elements in the massage phase,

c) that a passage (8) which leads at one end to the atmosphere and opens at the other end opens against the inner wall of the teat ruber (3) is provided in one of the spreading elements (7),

d) that the suction relief valve is formed by the opening (9) of the passage (8) and the wall region (10) of the teat rubber facing it, and

e) that the orifice area of the passage (8) is selected so that the quantity of air which enters through the suction valve (9, 10) during the massage phase brings about the release of the individual partial milk columns and the leading away of the milk without reverse washing effects.

2. Apparatus in accordance with claim 1, characterised in that the free end of the spreading elements (7) is formed as a radially outwardly projecting bead (11) in which the passage opening (9) which cooperates with the valve wall part (10) of the teat rubber (3) is provided.

3. Apparatus in accordance with claim 1 or claim 2, characterised in that the passage opening (9) has a smaller cross-section than the passage (8) which leads to atmosphere.

4. Apparatus in accordance with one or more of the preceding claims, characterised in that the spreading elements (7) are made sufficiently long that the suction valve formed by the passage opening (9) and the wall region (10) of the teat rubber (3) is disposed relatively closely beneath the teat (4).

5. Apparatus in accordance with one or more of the preceding claims, characterised in that a removable filter (20) and/or a restrictor member is/are provided at the atmospheric end of the passage (8).

**Revendications**

1. Ventouse double à traire à deux chambres avec une gaine (1), un élastique de trayon (3) introduit dans la gaine (1), une tubulure d'aspiration (6) pouvant être reliée à une conduite d'évacuation de lait (18) et une soupape de sûreté à dépression qui est ouverte par l'annulation de la dépression dans la gaine (1) ayant lieu lors du temps de décharge et permet alors à l'air de pénétrer dans la tubulure d'aspiration (6), caractérisée par la combinaison de points remarquables suivant lesquels,

a) il est prévu sur la tubulure d'aspiration (6) deux éléments d'écartement (7) diamétralement opposés formant une fourchette d'écartement pour l'élastique de trayon (3),

b) l'écartement des éléments d'écartement (7) est tel que, dans la phase d'aspiration, l'élastique de trayon (3) s'applique contre les extrémités libres des éléments d'écartement (7) et que dans la phase de décharge, il se forme des espaces libres (14) entre l'élastique de trayon (3) et les extrémités libres des éléments d'écartement,

c) il est prévu dans l'un des éléments d'écartement (7) un canal (8) conduisant d'un côté à l'atmosphère et débouchant de l'autre côté en face de la paroi intérieure de l'élastique de trayon (3),

d) la soupape de décharge à dépression est formée par le débouché (9) du canal (8) et la partie de paroi (10) lui faisant face de l'élastique de trayon (3), et

e) la section d'ouverture du canal (8) est telle que la quantité d'air pénétrant pendant la phase de décharge par la soupape à dépression (9, 10) provoque une séparation des colonnes de lait partielles élémentaires et l'évacuation du lait sans effet de lavage à contre-courant.

2. Dispositif selon la revendication 1, caractérisé en ce que l'extrémité libre des éléments d'écartement (7) forme un bourrelet (11) en saillie vers l'extérieur dans le sens radial dans lequel est prévu le débouché du canal (9) coopérant avec la cloison (10) de soupape de l'élastique de trayon (3).

3. Dispositif selon la revendication 1 ou 2, caractérisé en ce que le débouché du canal (9) a une section transversale plus petite que le canal (8) aboutissant dans l'atmosphère.

4. Dispositif selon une quelconque des revendications précédentes, caractérisé en ce que les éléments d'écartement (7) sont suffisamment longs pour que la soupape de décharge à dépression formée par le débouché du canal (9) et la zone de paroi (10) de l'élastique de trayon (3) soit placée de manière relativement étanche en dessous du trayon (4).

5. Dispositif selon une quelconque des revendications précédentes, caractérisé en ce qu'il est prévu un filtre (20) amovible et/ou un organe d'étranglement dans l'extrémité côté atmosphère du canal (8).

# FIG.1

# FIG.2

# FIG.3

Fig. 1a